# EUROPÄISCHE PATENTSCHRIFT

(11) **EP 4 147 031 B1**
(45) Veröffentlichungstag und Bekanntmachung des Hinweises auf die Patenterteilung: **18.09.2024**
(21) Anmeldenummer: 21720710.9
(22) Anmeldetag: 19.04.2021
(51) Int. Cl.: G01N 21/76

(54) **VORRICHTUNG ZUR CHEMOLUMINESZENZANALYSE**
DEVICE FOR CHEMILUMINESCENCE ANALYSIS
DISPOSITIF D'ANALYSE PAR CHIMIOLUMINESCENCE

(30) Priorität: 08.05.2020 DE 102020112570
(43) Veröffentlichungstag der Anmeldung: 15.03.2023
(73) Patentinhaber: Analytik Jena GmbH+Co. KG, 07745 Jena (DE)
(72) Erfinder: HANITSCH, Stefan, 06844 Dessau/Roßlau (DE); HOFMANN, Meike, 98693 Ilmenau (DE)
(74) Vertreter: Kratt-Stubenrauch, Kai Michael
(86) Internationale Anmeldenummer: PCT/EP2021/060048
(87) Internationale Veröffentlichungsnummer: WO 2021/223990

(56) Entgegenhaltungen:
- EP-A1- 0 019 257
- DE-A1- 3 940 035
- DE-A1- 4 305 652
- US-A- 4 193 963

## Beschreibung

Die vorliegende Erfindung betrifft eine Vorrichtung zur Chemolumineszenzanalyse sowie einen Elementaranalysator zur Elementaranalyse einer Probe umfassend eine erfindungsgemäße Vorrichtung.

Bei der Chemolumineszenz wird durch eine chemische Reaktion elektromagnetische Strahlung emittiert. Eine seit langem bekannte Anwendung der Chemolumineszenzanalyse besteht in der Detektion von Stickoxiden in der Umgebungsluft. Dabei reagiert Stickoxid (NO) mit Ozon (Os) in einer Reaktionskammer über angeregtes Stickstoffdioxid unter Abgabe eines Photons zu Stickstoffdioxid (NO₂). Die Reaktion geht mit einer vergleichsweise schwachen Leuchterscheinung, insbesondere im Infrarotbereich, einher, deren Detektion in der Regel einen vergleichsweise aufwendigen, apparativen, Aufwand notwendig macht.

Die zur Chemolumineszenzanalyse verwendeten Reaktorkammern werden üblicherweise aus Glas oder Metall gefertigt und sind kugel-, rohr- oder quaderförmig ausgestaltet. Typischerweise sind die Reaktorkammern mit zwei Zuleitungen und einer Auslassleitung versehen. Ein Infrarotsensor, häufig in Form eines Photomultipliers oder einer, insbesondere gekühlten, Fotodiode, ist mit der Reaktorkammer, beispielsweise über ein Schauglas, gekoppelt. Die Kopplung über ein Schauglas kann nachteilig zu Koppelverlusten bei der Signalerfassung führen, welche durch Reflexionen an mehreren Grenzflächen hervorgerufen werden.

Über die Zuleitungen stellt sich in Abhängigkeit von der Flussrate, des Drucks und/oder der Anordnung der Zuleitungen sowie der Auslassleitung eine Durchmischung in der Reaktorkammer ein, die eine bestimmte Verteilung der Chemilumineszenz zur Folge hat. Die Durchmischung in Folge der vorherrschenden Strömungsverhältnisse ist jedoch nachteilig häufig zufällig. Zudem sind die Anschlüsse für die Zuleitungen und die Ableitung häufig winklig an der Reaktorkammer angebracht, so dass es hinsichtlich des Durchmischungsgrades zu Gradienten in lateraler Richtung kommen kann. Über die Sensorfläche des Infrarotsensors ist jedoch nur ein Mittelwert der Infrarotstrahlung erfassbar. Somit besteht eine nachteilige Abhängigkeit der Messung von den vorherrschenden Strömungsverhältnissen. Zudem kann es ggf. zu einer Drift der Signale sowie zu unerwünschtem Rauschen kommen.

Die Patentanmeldungen DE 43 05 652 A1, EP 0 019 257 A1, DE 39 40 035 A1 und US 4 193 963 A offenbaren Vorrichtungen mit einer Mischeinheit für die Chemolumineszenzanalyse Ausgehend von den genannten Nachteilen liegt der vorliegenden Erfindung die Aufgabe zugrunde, die Messgenauigkeit von Einrichtungen zur Chemolumineszenzanalyse zu verbessern.

Diese Aufgabe wird gelöst durch die Vorrichtung nach Anspruch 1 sowie durch den Elementaranalysator nach Anspruch 13.

Hinsichtlich der Vorrichtung wird die Aufgabe gelöst durch eine Vorrichtung zur Chemolumineszenzanalyse, umfassend eine Reaktorkammer, eine erste Einlassöffnung zum Einbringen eines Probengases in die Reaktorkammer mittels einer ersten Zuleitung, eine zweite Einlassöffnung zum Einbringen eines Reaktionsgases in die Reaktorkammer mittels einer zweiten Zuleitung, eine Auslassöffnung zum Auslassen eines Gemisches aus dem Probengas und dem Reaktionsgas aus der Reaktorkammer mittels einer Auslassleitung, und eine Sensoreinheit zur Erfassung von Chemolumineszenzstrahlung, insbesondere in Form von Infrarotstrahlung, in der Reaktorkammer. Erfindungsgemäß umfasst die Vorrichtung eine Mischeinheit, in welcher das Probengas und das Reaktionsgas gemischt werden. Die Mischeinheit ist in einem ersten Endbereich der Reaktorkammer und die Sensoreinheit in einem dem ersten Endbereich gegenüberliegenden, zweiten Endbereich der Reaktorkammer angeordnet.

Die Sensoreinheit und die Mischeinheit sind vorzugsweise entlang einer Längsachse durch die Reaktionskammer angeordnet. Hierdurch werden Messungenauigkeiten aufgrund von Gradienten innerhalb der Reaktorkammer hinsichtlich des Durchmischungsgrades deutlich reduziert bzw. vermieden. Das Messsignal ist weniger anfällig für Schwankungen der Durchflussmenge und somit auch weniger anfällig für Drift und/oder Rauschen.

Die Mischeinheit bewirkt zudem einen deutlich gleichmäßigeren Ablauf der Reaktion in der Reaktionskammer. Dies erhöht die Quantenausbeute und führt damit einhergehend zu einer höheren Sensitivität bei der Messung der Chemolumineszenz. Alternativ kann auch bei gleichbleibender Sensitivität der apparative Aufbau vereinfacht werden. Es ist in diesem Zusammenhang sowohl eine Verringerung des apparativen Aufbaus als auch eine Miniaturisierung desselben denkbar.

Hinsichtlich einer Miniaturisierung ist anzumerken, dass mit zunehmender Reduzierung der Dimensionen der Vorrichtung die Reynoldszahl der strömenden Gase sinkt, was in Standard-Vorrichtungen zur Chemolumineszenzanalyse, insbesondere Vorrichtungen mit rohrförmiger Reaktorkammer, die Vermischung der Edukte erschwert. Je nach der gewählten Anordnung können zudem die Einlässe und der Auslass sowie die entsprechenden Anschlüsse für Zu- und Auslassleitungen zum Gesamtvolumen beitragen, was ebenfalls nachteilig für eine Miniaturisierung sein kann. Durch die Verwendung einer erfindungsgemäßen Mischeinheit können diese Nachteile überwunden werden, so dass die erfindungsgemäße Lösung eine Miniaturisierung einer entsprechenden Vorrichtung ermöglicht. Es ist demnach durch die vorliegende Erfindung vorteilhaft möglich, ein tragbares Gerät zur Chemolumineszenzanalyse bereitzustellen. Ein tragbares Gerät ist beispielsweise im Bereich der Umweltanalytik von großem Vorteil.

Eine Ausgestaltung beinhaltet, dass die Sensoreinheit einen Bildverstärker aufweist. Zudem kann ein Photomultiplier oder eine Fotodiode verwendet werden. Durch den Bildverstärker kann eine Verschiebung des Wellenlängenbereichs realisiert und die Signalintensität verbessert werden. Auf eine Kühlung der Sensoreinheit kann dadurch vorteilhaft verzichtet werden.

Erfindungsgemäß weist die Mischeinheit eine Vielzahl alternierender erster und zweiter Einlassöffnungen zum Einlass des Probengases und des Reaktionsgases in die Reaktorkammer auf, wobei die ersten Einlassöffnungen jeweils mit der ersten Zuleitung, und die zweiten Einlassöffnungen jeweils mit der zweiten Zuleitung fluidisch verbunden sind. Die Mischeinheit ist in dieser Ausgestaltung quasi in Form eines Brausekopfs bzw. einer Mischdüse ausgestaltet. Die ersten und zweiten Einlassöffnungen sind vorteilhaft zumindest teilweise alternierend angeordnet. Durch die Verwendung einer Vielzahl von ersten und zweiten Einlassöffnungen kann eine besonders gleichmäßige Einleitung der Edukte in die Reaktorkammer gewährleistet werden. Ein weiterer Vorteil besteht darin, dass bei vergleichsweise niedrigen Drücken bereits eine hoher Durchmischungsgrad des Probengases und des Reaktionsgases in der Reaktorkammer erreichbar ist.

In dieser Hinsicht ist es von Vorteil, wenn die Mischeinheit aus einer Niedertemperatur-Einbrand-Keramik (engl. low temperature cofired ceramics (LTCC) hergestellt ist. Dies ist insbesondere bei kleinen Dimensionierungen der Vorrichtung, also bei einer angestrebten Miniaturisierung, von Vorteil.

In einer weiteren Ausgestaltung umfasst die Vorrichtung eine Temperiereinheit, welche dazu ausgestaltet und/oder derart angeordnet ist, das Probengas und/oder das Reaktionsgas zu temperieren, bevor es in die Reaktorkammer und/oder in die Mischeinheit gelangt. Dies ermöglicht eine Anpassung der Reaktionskinetik bereits vor der Einleitung der Edukte in die Reaktorkammer.

In einer weiteren Ausgestaltung umfasst die Vorrichtung eine Reflektionseinheit, welche im ersten Endbereich der Reaktorkammer angeordnet ist. Bei der Reflektionseinheit handelt es sich beispielsweise um einen Spiegel, insbesondere einen gelochten Spiegel. Mittels der Reflektionseinheit können auch Anteile emittierten Lichts, welche nicht in Richtung der Sensoreinheit gerichtet sind, zur Sensoreinheit gelenkt werden. Diese Maßnahme erhöht die erreichbare Quantenausbeute und erhöht damit die Sensitivität.

In einer weiteren Ausgestaltung ist die Reaktorkammer zumindest teilweise aus einem reflektierenden Material hergestellt, oder zumindest teilweise, insbesondere im Bereich einer inneren Wandung, mit einem reflektierenden Material beschichtet. Dabei kann es sich sowohl um ein diffuses oder ein gerichtet reflektierendes Material handeln. Auch diese Maßnahme erhöht die erreichbare Quantenausbeute.

In einer weiteren Ausgestaltung der Vorrichtung umfasst die Reaktorkammer im zweiten Endbereich ein Fenster, wobei die Sensoreinheit im Bereich des Fensters außerhalb der Reaktorkammer angeordnet ist.

In diesem Zusammenhang ist es von Vorteil, wenn die Vorrichtung ein optisches Element, insbesondere eine Sammellinse oder ein Totalreflexionselement, zur Einkopplung der Chemolumineszenzstrahlung in die Sensoreinheit umfasst, welches optische Element zwischen dem Fenster und der Sensoreinheit angeordnet ist.

Es ist ferner von Vorteil, wenn zwischen dem optischen Element und einem Sensor der Sensoreinheit ein Immersionsmedium angeordnet ist. Das Immersionsmedium bewirkt eine Reduktion von Koppelverlusten zwischen dem optischen Element und der Sensoreinheit.

In noch einer Ausgestaltung der Vorrichtung ist die Auslassöffnung ringförmig ausgestaltet und fluidisch mit der Auslassleitung verbunden, wobei die Auslassöffnung im zweiten Endbereich angeordnet ist, insbesondere ist die Auslassöffnung um das Fenster herum angeordnet. Durch die ringförmige Ausgestaltung der Auslassöffnung kann das jeweilige Abgas konzentrisch, insbesondere konzentrisch um das Fenster, an welchem die Sensoreinheit angeordnet ist, herum, abgesaugt werden. Dieser gleichmäßige Gasabfluss bewirkt, dass ein Gradient der Leuchtintensität über die Oberfläche der Sensoreinheit möglichst gering ist.

Es ist von Vorteil, wenn die Reaktorkammer in Form eines Hohlzylinders ausgestaltet ist. Aber auch zahlreiche andere geometrische Formen, wie beispielsweise die Form eines Quaders, sind denkbar und fallen unter die vorliegende Erfindung.

Vorteilhaft weist die Reaktorkammer einen größeren Durchmesser und/oder eine größere Querschnittsfläche auf als die Sensoreinheit. In diesem Fall kann die Lumineszenzstrahlung auch lateral in die Sensoreinheit einfallen. Dieser Effekt wird durch die Verwendung eines optischen Elements noch verstärkt.

Bezüglich der Durchmesser und Querschnittsflächen der Reaktorkammer und Sensoreinheit sei ferner angemerkt, dass sich die Querschnittsflächen und Durchmesser der aktiven Flächen einer Sensoreinheit von der Querschnittsfläche und dem Durchmesser der Sensoreinheit und/oder von der Querschnittsfläche und dem Durchmesser der Reaktorkammer unterscheiden kann/können. Beispielsweise können die aktiven Flächen der Sensoreinheit quadratisch ausgestaltet sein, während ein Gehäuse der Sensoreinheit rund ist. Grundsätzlich ist auf die jeweiligen Verhältnisse der Durchmesser und/oder Querschnittsflächen abzustellen.

Die der Erfindung zugrundeliegende Aufgabe wird ferner gelöst durch einen Elementaranalysator zur Elementaranalyse einer Probe umfassend eine erfindungsgemäße Vorrichtung nach zumindest einer der beschriebenen Ausgestaltungen.

Hinsichtlich des Elementaranalysators ist es von Vorteil, wenn es sich um eine Vorrichtung zur Analyse des Gesamtstickstoffs in einer Probe, Stickoxid oder Stickstoffdioxid handelt.

Die Erfindung sowie ihre vorteilhaften Ausgestaltungen werden anhand der nachfolgenden Figur näher erläutert.

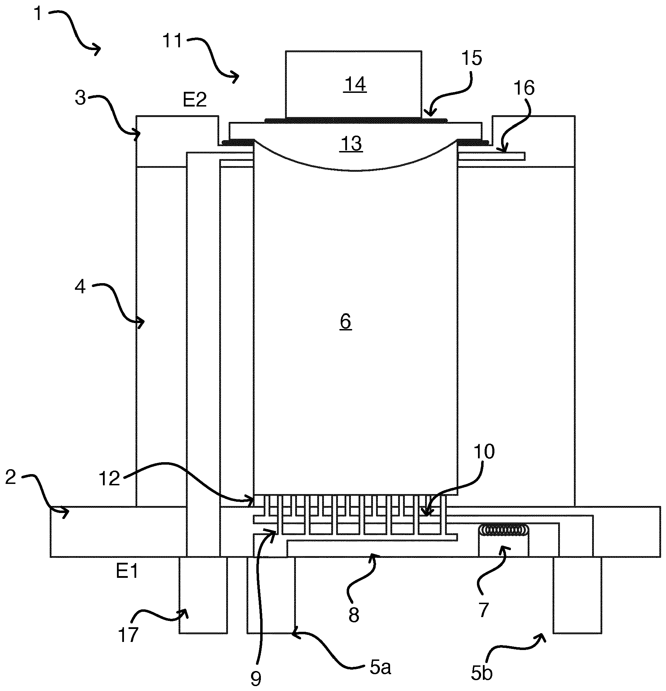

Die Fig. 1 zeigt eine vorteilhafte Ausgestaltung für eine erfindungsgemäße Vorrichtung 1. Die Vorrichtung 1 verfügt über eine untere 2 und eine obere Grundplatte 3, welche beispielsweise jeweils in Form einer Keramikplatte ausgestaltet sein können. Die erste Grundplatte 2 befindet in einem ersten Endbereich E1 der Vorrichtung und die zweite Grundplatte 3 in einem zweiten Endbereich E2 der Vorrichtung 1. Zwischen den beiden Grundplatten 2,3 ist ein Abstandshalter 4 angeordnet. Die Reaktorkammer 6 ist für die gezeigte Ausgestaltung in Form einer Durchgangsbohrung durch den Abstandshalter 4 gebildet.

Über fluidische Anschlüsse für eine erste 5a und eine zweite Zuleitung 5b, welche im Bereich der unteren Grundplatte 2 angeordnet sind, werden die gasförmigen Edukte, das Probengas und das Reaktionsgas in die Reaktorkammer 6 eingeleitet. Optional kann eine Temperiereinheit 7 vorgesehen sein, mittels welcher das Probengas und/oder das Reaktionsgas temperiert werden kann/können, insbesondere bevor das Gas/die Gase in die Reaktorkammer 6 gelangt/gelangen. Für die hier gezeigte Ausgestaltung ist die Temperiereinheit 7 beispielhaft im Bereich der unteren Grundplatte 2 angeordnet und umfasst ein Widerstandselement.

Die Edukte gelangen über die Mischeinheit 8 in die Reaktorkammer 6. Die Mischeinheit 8 ist in Form eines Brausekopfes ausgestaltet und umfasst eine Vielzahl an ersten 9 und zweiten Einlassöffnungen 10, welche hier alternierend angeordnet sind, und mit der ersten 5a bzw. zweiten Zuleitung 5b fluidisch verbunden sind. Durch die Verwendung der Mischeinheit 8 kann eine gleichmäßige Einleitung des Reaktionsgases und des Probengases in die Reaktorkammer 6 gewährleistet werden.

Bei Kontakt erfolgt eine spontane Reaktion des Probengases und des Reaktionsgases, wobei Chemilumineszenz auftritt. Die Intensität dieser Leuchterscheinung dient als Maß für die Konzentration eines der Edukte.

Um die Sensitivität der Messung zu erhöhen ist es zweckdienlich, soviel Licht wie möglich zu der im zweiten Endbereich E2 angeordnete Sensoreinheit 11 zu leiten. Zu diesem Zweck ist im ersten Endbereich E1 als optionale Komponente eine Reflektionseinheit12, beispielsweise in Form eines gelochten Spiegels, angeordnet. Ebenfalls können die Oberflächen der Reaktorkammer 6 optional aus einem reflektierenden Material hergestellt oder mit einem reflektierenden Material beschichtet sein.

Für die gezeigte Ausgestaltung umfasst die Sensoreinheit 11 ein optisches Element 13 und einen Sensor 14, wobei zwischen dem optischen Element 13 und dem Sensor 14 ein Immersionsmedium 15 angeordnet ist, welches die Koppelverluste an den Grenzflächen zwischen dem Sensor 14 und dem optischen Element vermindert. Bei dem Sensor 14 kann es sich beispielsweise um einen Photomultiplier oder eine Fotodiode handeln. Bei dem optischen Element 13 wiederum handelt es sich beispielswiese um eine Sammellinse.

Über einen konzentrisch umlaufenden Absaugkanal (m) in der oberen Platte gelangen die Produkte, überschüssige Edukte sowie Trägergase als Abgas über eine zweite Bohrung im Abstandshalter aus der Reaktorkammer 6. Die fluidischen und elektrischen Anschlüsse können derart ausgeführt werden, dass sie auf die untere Platte 2 beschränkt sind.

Die Auslassöffnung 16 ist ebenfalls im zweiten Endbereich E2 angeordnet. Für die hier gezeigte Ausgestaltung ist sie ringförmig ausgestaltet und fluidisch mit der Auslassleitung 17verbunden. Durch die Auslassöffnung 16 gelangen Produkte, überschüssige Edukte sowie Trägergase als Abgase über die Auslassleitung 17 aus der Reaktorkammer 6 hinaus. Vorteilhaft sind für die gezeigte Ausgestaltung für eine erfindungsgemäße Vorrichtung 1 alle fluidischen und elektrischen Anschlüsse im Bereich der unteren Grundplatte 2 angeordnet und entsprechend derart ausgeführt, dass sie auf die untere Grundplatte 2 beschränkt sind. Dies vereinfacht den Aufbau der Vorrichtung 1 erheblich.

Es sei darauf verwiesen, dass die vorliegende Erfindung keineswegs auf die hier gezeigte Ausgestaltung beschränkt ist. Diese ist lediglich exemplarisch zu verstehen. Andere Varianten können andere in der Beschreibung erwähnte Ausgestaltungen umfassen. Auch sind zahlreiche weitere mögliche Aufbauten der Reaktionskammer 6 denkbar und fallen ebenfalls unter die vorliegende Erfindung. Eine bevorzugte Anwendung für eine erfindungsgemäße Vorrichtung 1 besteht in einer Verwendung in einem hier nicht separat dargestellten Elementaranalysator. Eine weitere bevorzugte Anwendung besteht in der Bereitstellung eines tragbaren Geräts zur Chemolumineszenzanalyse, welches insbesondere im Bereich der Umweltanalytik verwendbar ist.

### Bezugszeichen

- 1: Vorrichtung
- 2: Untere Grundplatte
- 3: Obere Grundplatte
- 4: Abstandshalter
- 5: a,b erste, zweite Zuleitung
- 6: Reaktorkammer
- 7: Temperiereinheit
- 8: Mischeinheit
- 9: Erste Einlassöffnungen
- 10: Zweite Einlassöffnungen
- 11: Sensoreinheit
- 12: Reflektionseinheit
- 13: Optisches Element
- 14: Sensor
- 15: Immersionsmedium
- 16: Auslassöffnung
- 17: Auslassleitung

- E1: erster Endbereich
- E2: zweiter Endbereich

## Patentansprüche

1. Vorrichtung (1) zur Chemolumineszenzanalyse, umfassend
eine Reaktorkammer (6),
eine erste Einlassöffnung (9) zum Einbringen eines Probengases in die Reaktorkammer (6) mittels einer ersten Zuleitung (5a),
eine zweite Einlassöffnung (10) zum Einbringen eines Reaktionsgases in die Reaktorkammer (6) mittels einer zweiten Zuleitung (5b),
eine Auslassöffnung (16) zum Auslassen eines Gemisches aus dem Probengas und dem Reaktionsgas aus der Reaktorkammer (6) mittels einer Auslassleitung (17), und
eine Sensoreinheit (11) zur Erfassung von Chemolumineszenzstrahlung in der Reaktorkammer (6),
wobei die Vorrichtung (1) eine Mischeinheit (8) umfasst, in welcher das Probengas und das Reaktionsgas gemischt werden,
die Mischeinheit (8) in einem ersten Endbereich (E1) der Reaktorkammer (6) angeordnet ist, und
die Sensoreinheit (11) in einem dem ersten Endbereich (E1) gegenüberliegenden, zweiten Endbereich (E2) der Reaktorkammer (6) angeordnet ist,
wobei die Mischeinheit (8) eine Vielzahl alternierender erster (9) und zweiter Einlassöffnungen (10) zum Einlass des Probengases und des Reaktionsgases in die Reaktorkammer (6) aufweist, wobei die ersten Einlassöffnungen (9) jeweils mit der ersten Zuleitung (5a), und die zweiten Einlassöffnungen (10) jeweils mit der zweiten Zuleitung (5b) fluidisch verbunden sind.

2. Vorrichtung (1) nach Anspruch 1,
wobei die Sensoreinheit (11) einen Bildverstärker aufweist.

3. Vorrichtung (1) nach Anspruch 1,
wobei die Mischeinheit (8) aus einer Niedertemperatur-Einbrand-Keramik hergestellt ist.

4. Vorrichtung (1) nach zumindest einem der vorherigen Ansprüche,
umfassend eine Temperiereinheit (7), welche dazu ausgestaltet und/oder derart angeordnet ist, das Probengas und/oder das Reaktionsgas zu temperieren, bevor es in die Reaktorkammer (6) und/oder in die Mischeinheit (8) gelangt.

5. Vorrichtung (1) nach zumindest einem der vorherigen Ansprüche,
umfassend eine Reflektionseinheit (12), welche im ersten Endbereich (E1) der Reaktorkammer (6) angeordnet ist.

6. Vorrichtung (1) nach zumindest einem der vorherigen Ansprüche,
wobei die Reaktorkammer (6) zumindest teilweise aus einem reflektierenden Material hergestellt, oder zumindest teilweise, insbesondere im Bereich einer inneren Wandung, mit einem reflektierenden Material beschichtet ist.

7. Vorrichtung (1) nach zumindest einem der vorherigen Ansprüche,
wobei die Reaktorkammer (6) im zweiten Endbereich (E2) ein Fenster umfasst, und wobei die Sensoreinheit (11) im Bereich des Fensters außerhalb der Reaktorkammer (6) angeordnet ist.

8. Vorrichtung (1) nach Anspruch 7,
umfassend ein optisches Element (13), insbesondere eine Sammellinse oder ein Totalreflexionselement, zur Einkopplung der Chemolumineszenzstrahlung in die Sensoreinheit (11), welches optische Element (13) zwischen dem Fenster und der Sensoreinheit (11) angeordnet ist.

9. Vorrichtung (1) nach Anspruch 8,
wobei zwischen dem optischen Element (13) und einem Sensor (14) der Sensoreinheit (11) ein Immersionsmedium (15) angeordnet ist.

10. Vorrichtung (1) nach zumindest einem der vorherigen Ansprüche,
wobei die Auslassöffnung (16) ringförmig ausgestaltet und fluidisch mit der Auslassleitung (17) verbunden ist, und wobei die Auslassöffnung (16) im zweiten Endbereich (E2) angeordnet ist, insbesondere ist die Auslassöffnung (16) um das Fenster herum angeordnet.

11. Vorrichtung (1) nach zumindest einem der vorherigen Ansprüche,
wobei die Reaktorkammer (6) in Form eines Hohlzylinders ausgestaltet ist.

12. Vorrichtung (1) nach zumindest einem der vorherigen Ansprüche,
wobei ein Durchmesser der Reaktorkammer (6) größer ist als ein Durchmesser der Sensoreinheit (11).

13. Elementaranalysator zur Elementaranalyse einer Probe umfassend eine Vorrichtung (1) nach zumindest einem der vorherigen Ansprüche.

14. Elementaranalysator nach Anspruch 13,
wobei es sich um eine Vorrichtung zur Analyse des Gesamtstickstoffs in einer Probe, Stickoxid oder Stickstoffdioxid handelt.

## Claims

1. A device (1) for chemiluminescence analysis, comprising
A reaction chamber (6),
a first inlet opening (9) for introducing a sample gas into the reaction chamber (6) using a first supply line (5a),
a second inlet opening (10) for introducing a reaction gas into the reaction chamber (6) using a second supply line (5a),
an outlet opening (16) for discharging a mixture of the sample gas and the reaction gas from the reaction chamber (6) using an outlet line (17), and
a sensor unit (11) for detecting chemiluminescence in the reaction chamber (6),
wherein the device (1) comprises a mixer unit (8) in which the sample gas and the reaction gas are mixed,
the mixer unit (8) is arranged in a first end area (E1) of the reaction chamber (6), and the sensor unit (11) is arranged in a second end area (E2) of the reaction chamber (6) opposite the first end area (E1),
wherein the mixer unit (8) has a multitude of alternating first (9) and second inlet openings (10) for introducing the sample gas and the reaction gas into the reaction chamber (6), wherein each first inlet opening (9) is fluidically connected to the first supply line (5a), and each second inlet opening (10) is fluidically connected to the second supply line (5b).

2. The device (1) as claimed in claim 1,
wherein the sensor unit (11) has an image intensifier.

3. The device (1) as claimed in claim 1,
wherein the mixer unit (8) is made from low-temperature co-fired ceramics.

4. The device (1) as claimed in at least one of the preceding claims,
comprising a tempering unit (7), which is configured and/or arranged in such a way as to bring the sample gas and/or the reaction gas to the right temperature before they reach/it reaches the reaction chamber (6) and/or the mixer unit (8).

5. The device (1) as claimed in at least one of the preceding claims,
comprising a reflection unit (12), which is arranged in a first end area (E1) of the reaction chamber (6).

6. The device (1) as claimed in at least one of the preceding claims,
wherein the reaction chamber (6) is made at least partially of a reflective material, or is coated at least partially with a reflective material, in particular in the area of an inner wall.

7. The device (1) as claimed in at least one of the preceding claims,
wherein the reaction chamber (6) comprises a window in the second end area (E2), and wherein the sensor unit (11) is arranged outside the reaction chamber (6) in the area of the window.

8. The device (1) as claimed in claim 7,
comprising an optical element (13), in particular a converging lens or a total reflection element, for coupling the chemiluminescence into the sensor unit (11), said optical element (13) being arranged between the window and the sensor unit (11).

9. The device (1) as claimed in claim 8,
wherein an immersion medium (15) is arranged between the optical element (13) and a sensor (14) of the sensor unit (11).

10. The device (1) as claimed in at least one of the preceding claims,
wherein the outlet opening (16) is configured in the shape of a ring and is fluidically connected to the outlet line (17), and wherein the outlet opening (16) is arranged in the second end area (E2), in particular the outlet opening (16) is arranged around the window.

11. The device (1) as claimed in at least one of the preceding claims,
wherein the reaction chamber (6) is configured in the shape of a hollow cylinder.

12. The device (1) as claimed in at least one of the preceding claims,
wherein a diameter of the reaction chamber (6) is greater than a diameter of the sensor unit (11).

13. An elemental analyzer for elemental analysis of a sample, comprising a device (1) as claimed in at least one of the preceding claims.

14. The elemental analyzer as claimed in claim 13,
wherein it is a device for analyzing the total nitrogen in a sample, nitric oxide or nitrogen dioxide.

## Revendications

1. Dispositif (1) destiné à l'analyse par chimioluminescence, lequel dispositif comprend
une chambre de réacteur (6),
un premier orifice d'entrée (9) pour introduire un gaz échantillon dans la chambre de réacteur (6) au moyen d'une première conduite d'alimentation (5a),
un deuxième orifice d'entrée (10) pour introduire un gaz de réaction dans la chambre de réacteur (6) au moyen d'une deuxième conduite d'alimentation (5b), un orifice de sortie (16) pour évacuer un mélange du gaz échantillon et du gaz de réaction de la chambre de réacteur (6) au moyen d'une conduite de sortie (17), et une unité de capteur (11) destinée à détecter le rayonnement chimioluminescent dans la chambre de réacteur (6),
le dispositif (1) comprenant une unité de mélange (8), dans laquelle le gaz échantillon et le gaz de réaction sont mélangés,
l'unité de mélange (8) étant disposée dans une première zone d'extrémité (E1) de la chambre de réacteur (6), et
l'unité de capteur (11) étant disposée dans une deuxième zone d'extrémité (E2) de la chambre de réacteur (6), opposée à la première zone d'extrémité (E1), l'unité de mélange (8) présentant une pluralité de premiers (9) et de deuxièmes orifices d'entrée (10) alternants pour l'entrée du gaz échantillon et du gaz de réaction dans la chambre de réacteur (6), les premiers orifices d'entrée (9) étant respectivement reliés de manière fluidique à la première conduite d'alimentation (5a), et les deuxièmes orifices d'entrée (10) étant respectivement reliés de manière fluidique à la deuxième conduite d'alimentation (5b).

2. Dispositif (1) selon la revendication 1,
pour lequel l'unité de capteur (11) comprend un amplificateur d'image.

3. Dispositif (1) selon la revendication 1,
pour lequel l'unité de mélange (8) est fabriquée à partir d'une céramique de cuisson à basse température.

4. Dispositif (1) selon au moins l'une des revendications précédentes,
lequel dispositif comprend une unité de régulation de température (7), laquelle est conçue et/ou disposée de manière à réguler la température du gaz échantillon et/ou du gaz de réaction avant qu'il ne pénètre dans la chambre de réacteur (6) et/ou dans l'unité de mélange (8).

5. Dispositif (1) selon au moins l'une des revendications précédentes,
lequel dispositif comprend une unité de réflexion (12) disposée dans la première zone d'extrémité (E1) de la chambre de réacteur (6).

6. Dispositif (1) selon au moins l'une des revendications précédentes,
pour lequel la chambre de réacteur (6) est au moins partiellement réalisée en un matériau réfléchissant, ou est au moins partiellement revêtue, notamment au niveau d'une paroi interne, d'un matériau réfléchissant.

7. Dispositif (1) selon au moins l'une des revendications précédentes,
pour lequel la chambre de réacteur (6) comprend une fenêtre dans la deuxième zone d'extrémité (E2), et
pour lequel l'unité de capteur (11) est disposée à l'extérieur de la chambre de réacteur (6) dans la zone de la fenêtre.

8. Dispositif (1) selon la revendication 7,
lequel dispositif comprend un élément optique (13), notamment une lentille convergente ou un élément de réflexion totale, pour coupler le rayonnement chimioluminescent dans l'unité de capteur (11), lequel élément optique (13) est disposé entre la fenêtre et l'unité de capteur (11).

9. Dispositif (1) selon la revendication 8,
pour lequel un produit d'immersion (15) est disposé entre l'élément optique (13) et un capteur (14) de l'unité de capteur (11).

10. Dispositif (1) selon au moins l'une des revendications précédentes,
pour lequel l'orifice de sortie (16) est de forme annulaire et est relié fluidiquement à la conduite de sortie (17),
l'orifice de sortie (16) étant disposé dans la deuxième zone d'extrémité (E2), l'orifice de sortie (16) étant notamment disposé autour de la fenêtre.

11. Dispositif (1) selon au moins l'une des revendications précédentes,
pour lequel la chambre de réacteur (6) est conçue sous la forme d'un cylindre creux.

12. Dispositif (1) selon au moins l'une des revendications précédentes,
pour lequel un diamètre de la chambre de réacteur (6) est supérieur à un diamètre de l'unité de capteur (11).

13. Analyseur élémentaire destiné à l'analyse élémentaire d'un échantillon, lequel analyseur comprend un dispositif (1) selon au moins l'une des revendications précédentes.

14. Analyseur élémentaire selon la revendication 13,
pour lequel il s'agit d'un dispositif destiné à l'analyse de l'azote total dans un échantillon, de l'oxyde d'azote ou du dioxyde d'azote.
